Europäisches Patentamt

European Patent Office

Office européen des brevets

(11) Publication number: **0 286 738**
**A1**

## (12) EUROPEAN PATENT APPLICATION

(21) Application number: 87303228.8

(22) Date of filing: 13.04.87

(51) Int. Cl.4: **G06K 19/08** , **B42D 15/02**

(43) Date of publication of application:
**19.10.88 Bulletin 88/42**

(84) Designated Contracting States:
**AT BE CH DE ES FR GB GR IT LI LU NL SE**

(71) Applicant: **U.S. BANKNOTE COMPANY L.P.**
**345 Hudson Street**
**New York New York 10014(US)**

(72) Inventor: **Colgate, Gilbert, Jr.**
**120 East 89th Street**
**New York New York 10028(US)**

(74) Representative: **Raynor, John et al**
**W.H. Beck, Greener & Co 7 Stone Buildings**
**Lincoln's Inn**
**London WC2A 3SZ(GB)**

(54) Security tape with integrated hologram and magnetic strip.

(57) An identification card and method of manufacturing the same in which a holographic image (26) is embossed on a clear polyester carrier which is then coated with ferrous oxide to form a magentic strip (24) with an optionally viewable holographic image thereon. The strip is then mounted on a plastic substrate, and the carrier discarded.

FIG. 2

# SECURITY TAPE WITH INTEGRATED HOLOGRAM AND MAGNETIC STRIP

## BACKGROUND AND SUMMARY OF THE INVENTION

The invention relates to security tape for mounting on a plastic information bearing substrate, a document or other element.

Credit cards are considered by most people in the United States to be an essential of modern life. Typically, information is printed and embossed on a plastic substrate identifying the holder of card and the issuer. A magnetic strip contains similar information and is mounted on one side, normally the rear side, for storing the information magnetically. Inevitably, increased counterfeiting of such cards has accompanied the increase in their use. This has in turn lead to great interest in incorporating into each individual card measures making counterfeiting as difficult as possible.

One technique now being adopted is to provide on each credit card a small diffraction grating forming an image which appears to be three dimensional at least in the horizontal direction. Such a diffraction grating is more commonly known as a hologram and is manufactured by interferring coherent laser light reflected from or transmitted through an object with light transmitted directly from the laser and serving as a reference. Such a hologram when reconstructed with coherent light from the same or a similar laser provides an image which appears to have three dimensions, i.e. appears to have depth. Of course, lasers are not normally available at loca tions such as restaurants and shops where credit cards must be inspected. However, through the use of conventional techniques a diffraction grating of this sort can be made which is viewable in natural light, i.e. a so called white light viewable hologram.

Credit cards are now being issued incorporating such a white light viewable hologram on the front surface of the card. Such a hologram is relatively difficult to manufacture and requires fairly complex equipment. Therefore, the average counterfeiter is discouraged if not entirely prevented from attempting to counterfeit such a card. Moreover, the authenticity of the white light viewable hologram and hence the card can be readily ascertained by any unskilled person even under poor light simply by viewing the hologram and observing whether it has the illusion of depth and changing colors which are the characteristics of a white light viewable hologram. While providing satisfactory protection or at least discouragement of counterfeiting this arrangement has several drawbacks.

First, the space available on the front of the card is very limited. Most issuers of such cards want to use all of the space for imparting that commerical information and for identifying themselves and the issuer of the card. If the hologram is made too small it may be difficult for the clerk or other person accepting the card to see whether the hologram is truly there and whether it is simulated. Discarded cards, even if cut in two, may still have a full hologram which can be transferred to a counterfeit card for fraudulent use.

According to the present invention, an optically viewable hologram is formed on the magnetic strip which is normally mounted on the rear of the card for storing information about the card magnetically. This reserves the entirety of the front of the card for use by the issuer for whatever purpose he may desire. The hologram on the magnetic strip is relatively large in area and is very easy to identify as such. In addition, placing the hologram on the rear of the magnetic strip encourages the clerk or other person accepting the card to turn over the card and check the signature panel. This is rarely done at the present time.

According to the method of the present invention, a white light viewable hologram is first cast. More specifically, a hologram is formed on one side of a carrier of clear plastic. The hologram may be embossed on a metallized carrier or cast on clear plastic and made visible by deposit of a non-magnetic metal or application of a non-magnetic ink. The hologram is then coated with ferrous oxide to form a magnetic strip with an optically viewable image thereon. The magnetic strip can then be mounted onto a plastic substrate and the carrier removed to form the card of the present invention. If desired miniscule clear glass beads or other light scattering compounds can be provided between the layer of clear material and the ferrous oxide to provide the possibility of yet another authentication of the card as well as making the holographic image more impervious to counterfeiting through reconstruction by laser techniques.

Other objects and purposes of the invention will be clear from the following detailed description of the drawings.

## BRIEF DESCRIPTION OF THE DRAWINGS

FIGURE 1 shows a perspective view of the rear side of a credit card according to the pressent invention with an optically viewable hologram disposed on the magnetic strip.

FIGURE 2 shows a schematic view of the hologram of the present invention showing the layers and components forming the cast hologram and magnetic layer.

## DETAILED DESCRIPTION OF THE DRAWINGS

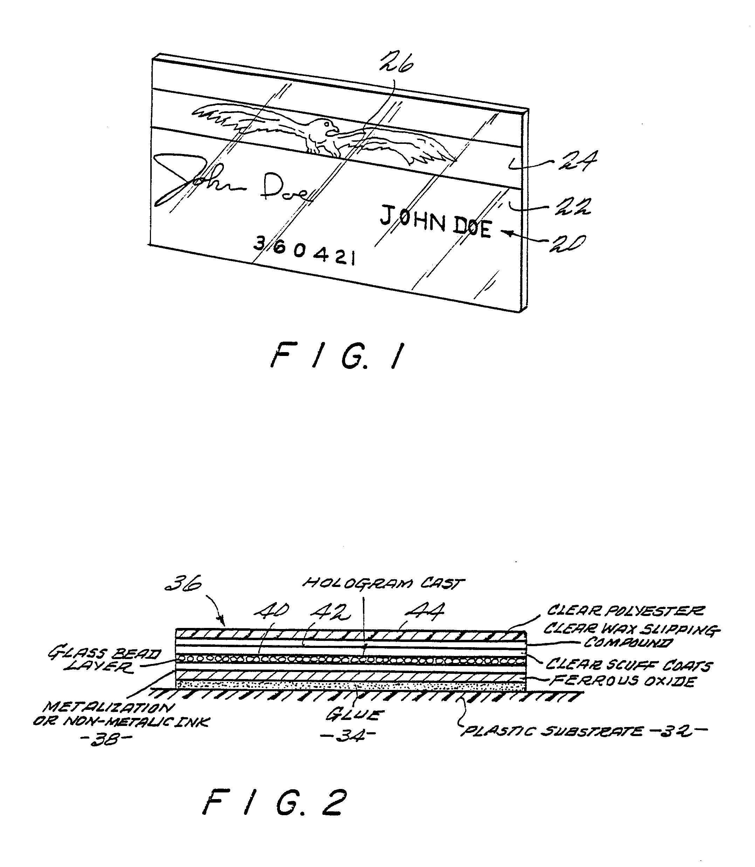

Reference is now made to Figures 1 and 2 which illustrate a first embodiment of the present invention. In this embodiment a conventional credit card 20 is formed with a plastic substrate 22 and a magnetic strip of 24 bearing a white light viewable hologram 26.

The hologram is formed according to the present invention as noted above. More particularly, the hologram is formed on a clear plastic carrier for example a one-half to one mil clear polyester to the bottom of which has been coated a release coating of a clear wax slipping compound of the type commercially available. Any number of coatings of a clear scuff may be provided on the clear wax slipping compound. Such scuff coats are relatively hard and are conventionally used with magnetic tape to protect the strip after fixation. A variety of suitable coats are available.

The carrier can be metallized and then embossed or the image can be cast in the carrier and made visible by metallizing or applying non-metallic ink.

If cast, the hologram is coated in a vacuum metalizer with a metal such as aluminum or printed with a non-metallic ink to make the hologram visible. The metallic material or ink used must be non-magnetic. The design and direction of the image can be as desired.

The metallized layer is now preferably treated to facilitate adhesion of the ferrous oxide, for example with methylethyl ketone. A slurry of high-density ferrous oxide is next applied to the hologram by a gravure coater in the same fashion is now used to produce magnetic strips for cards. The ferrous oxide is generally combined with an adhesive which fixes the oxide particles when dry and upon later application of heat (in the hot stamping process) provides the "glue" by which the magnetic tape permanantly adheres to the back of the card.

A coating of glass beads can be provided beneath the hologram. Such beads typically are less than 5 μm in diameter and are made so that when hit by light of certain radiation the resultant radiation can be read and measured as a further test of the validity of the card. These beads can be incorporated into a clear lacquer and coated on the bottom of the holographic image.

Such light scattering beads, compounds or chemicals additionally serve the purpose of protecting the difraction grating from reconstruction (i.e. counterfeiting by laser for holographic) technology. The assembly is fixed to the card by hot stamping. Application of heat and pressure activates the glue while the release layer separates from the polyester. The polyester can then be removed and discarded.

Referring to Figure 2, magnetic strip 30 is shown adhered to conventional plastic substrate 32. The strip includes a layer of glue 34, ferrous oxide layer 36 storing the magnetic information, the above noted layer of glass beads 38, respective layers of scuff coats and clear wax slipping compounds 40 and 42 and the clear polyester layer 44.

Many changes and modifications in the above described embodiment of the invention can, of course, be carried out without departing from the scope thereof. While the invention finds particular utility as a security measure on credit cards, the tape can be used on any document or the like where magnetic storage is desired. Accordingly, that scope is intended to be limited only by the scope of the appended claims.

## Claims

1. A magnetic strip (24) for storing information magnetically and having an optically viewable holographic image (26) thereon.

2. An identification card comprising:

a plastic substrate (22) having information embossed thereon and

a magnetic strip as claimed in Claim 1 mounted on one side of said card.

3. A card as claimed in Claim 1 wherein said image is embossed on said strip.

4. A card as claimed in Claim 2 or Claim 3 wherein said strip includes a non-magnetic layer with a holographic image and a layer of ferrous oxide storing said information magnetically between the non-magnetic layer and the plastic substrate.

5. A card as claimed in Claim 4 further including a layer of glass beads between the said one side of the non-magnetic layer and the ferrous oxide layer.

6. A card as claimed in Claim 4 or Claim 5 further including a layer of clear wax slipping compound and a clear scuff coat, the non-magnetic layer being between the slipping compound and the ferrous oxide layer.

7. A card as claimed in any one of Claims 2 to 6 further including a layer of glue mounting the strip on the substrate.

8. A method of manufacturing a security strip comprising the steps of:

forming a hologram (26) on a carrier; and

coating the carrier with a magnetic material (24) to form a magnetic strip with an optically viewable holographic image thereon.

9. A method as claimed in Claim 8 wherein the magnetic material is ferrous oxide.

10. A method as claimed in Claim 8 or Claim 9, wherein the hologram is formed on one side of the carrier, and the said one side is coated with the magnetic material.

11. A method of manufacturing an identification card, which method comprises producing a security strip by a method as claimed in any one of Claims 7 to 10, and mounting the magnetic strip on a plastic substrate having information embossed thereon.

12. A method as claimed in Claim 11 further including the step of placing a layer of glass beads or light scattering compounds between the carrier and the magnetic material.

13. A method as claimed in Claim 11 or Claim 12 including the step of applying glue to said magnetic material to mount the strip on the substrate.

14. A method as claimed in Claim 13 wherein said step of mounting includes applying heat and pressure to the the strip so that the carrier separates from the strip and the strip adheres to the substrate.

15. A method as claimed in any one of Claims 8 to 14 wherein said step of forming includes embossing the hologram onto a layer of metallized polyester.

16. A method as claimed in any one of Claims 8 to 15, including the further step of removing the carrier.

17. A method as claimed in any one of Claims 8 to 16 wherein the step of forming includes casting the hologram onto a layer of clear polyester and laying down non-metallic ink on the embossed hologram.

F I G. 1

36

HOLOGRAM CAST

40  42  44

CLEAR POLYESTER

CLEAR WAX SLIPPING
COMPOUND

GLASS BEAD
LAYER

CLEAR SCUFF COATS

FERROUS OXIDE

METALIZATION
OR NON-METALIC INK
-38-

GLUE
-34-

PLASTIC SUBSTRATE -32-

F I G. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 422 908 (L. KURZ) <br> * Figure 2; page 4, paragraphs 1,2; page 17, line 5 - page 21, line 9; page 12, lines 6-13 * | 1,3,4,6,8-10 | G 06 K 19/08 <br> B 42 D 15/02 |
| Y |  | 2,7,11,13-15 |  |
| A | US-A-4 034 211 (HORST et al.) <br> * Figures 1-3; column 4, line 26 - column 5, line 10; column 6, lines 49-54 * | 1,8 |  |
| Y |  | 2,7,11,13-15 |  |
| A | US-A-4 092 526 (BECK) <br> * Figures 1-3; column 3, lines 22-65; column 5, lines 18-37; column 6, lines 31-68 * | 1,2,8,9 |  |
| E | US-A-4 684 795 (COLGATE, Jr.) <br> * Whole document * | 1-17 | TECHNICAL FIELDS SEARCHED (Int. Cl.4) <br><br> G 06 K <br> B 42 D |

The present search report has been drawn up for all claims

| Place of search | Date of completion of the search | Examiner |
|---|---|---|
| THE HAGUE | 15-12-1987 | GYSEN L.A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)